(19) Europäisches Patentamt
European Patent Office
Office européen des brevets

(11) Veröffentlichungsnummer: **0 052 313**
**B1**

(12) **EUROPÄISCHE PATENTSCHRIFT**

(45) Veröffentlichungstag der Patentschrift: **25.09.85**

(51) Int. Cl.[4]: **A 01 N 25/04**

(21) Anmeldenummer: **81109541.3**

(22) Anmeldetag: **06.11.81**

(54) **Fliessfähige Pestizide.**

(30) Priorität: **17.11.80 US 207318**

(43) Veröffentlichungstag der Anmeldung: **26.05.82 Patentblatt 82/21**

(45) Bekanntmachung des Hinweises auf die Patenterteilung: ***25.09.85 Patentblatt 85/39***

(84) Benannte Vertragsstaaten: **AT BE CH DE FR GB IT LI NL**

(56) Entgegenhaltungen: **US - A - 4 000 258**

(73) Patentinhaber: **Mobay Chemical Corporation, Penn Lincoln Parkway West, Pittsburgh, Pennsylvania 15205 (US)**

(72) Erfinder: **Synek, Joseph, 9011 West 105 Street, Overland Park Kansas 66212 (US)**

(74) Vertreter: **Gremm, Joachim, Dr. et al, Bayer AG c/o Zentralbereich Patente, Marken und Lizenzen, D-5090 Leverkusen 1, Bayerwerk (DE)**

**EP 0 052 313 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft fliessfähige pestizide Mittel auf Basis biologisch aktiver pestizider Stoffe. Ferner betrifft die Erfindung ein Verfahren zur Herstellung dieser pestiziden Mittel. Die erfindungsgemässen Mittel sind in Wasser leicht dispergierbar, besitzen eine gute Lagerstabilität und neigen auch bei niedrigen Temperaturen nicht zur Kristallisation.

Es gibt zwei verschiedene Hauptarbeitsgebiete, die sich auf die Verwendung von Chemikalien beziehen, die zur Bekämpfung biologischer Schädlinge, sowie pflanzlicher als auch tierischer Art, wirksam sind. Die erste befasst sich mit der Auffindung und Entwicklung chemischer Verbindungen und Mischungen solcher Verbindungen, die selektiv gegen den Schädling wirken, ohne die zu schützende Umwelt zu schädigen, insbesondere Nutzpflanzen, Nutzvieh oder Zierpflanzen. Die andere umfasst die Entwicklung von Methoden der Anwendung geeigneter Dosierungen solcher sogenannter «biologisch aktiver» Verbindungen auf den zu behandelnden Wirt in wirksamer und wirtschaftlicher Weise. Zu solchen Methoden gehört die Verwendung von Mitteln, die Inhaltsstoffe enthalten, die sowohl gegenüber diesem zu behandelnden Wirt und dem zu bekämpfenden Schädling als auch gegenüber dem «Wirkstoff» inert sind. Diese «inerten» Inhaltsstoffe sind einsetzbar zur Festlegung der physikalischen Eigenschaften der Gesamtformulierung.

Eine besonders wertvolle Formulierung eines Mittels ist eine solche, bei der der «Wirkstoff» in einfacher Weise in Wasser oder einem vorwiegend wässrigen Medium dispergiert werden kann. Der Endverbraucher kann dann ohne besonderen Aufwand Suspensionen herstellen und sie in geeigneter Dosierung auf den Wirt aufbringen, indem er das Verdünnungsverhältnis mit Wasser bestimmt. Im Idealfalle sollte der «Wirkstoff» selbst im Wasser leicht löslich sein, aber leider sind nur sehr wenige Verbindungen, die als Pestizide von Interesse sind, entweder hinreichend löslich in Wasser oder in einer Weise veränderbar, dass sie hinreichend in Wasser löslich werden, zumindest nicht, ohne ihre Kosten oder biologische Wirksamkeit nachteilig zu beeinflussen. Aus diesem Grunde hat sich die Gepflogenheit entwickelt, dass diese Verbindungen mit «inerten» Inhaltsstoffen kombiniert oder formuliert werden, um ihre Dispergierbarkeit in Wasser zu erleichtern.

Solche in Wasser dispergierbaren Formulierungen werden im allgemeinen dadurch hergestellt, dass man die «Wirkstoffe», einen Emulgator oder ein Netzmittel, ein Dispergiermittel und einen «inerten» Träger oder Füllstoff miteinander kombiniert. Dieses letztgenannte Material hat sich als notwendig erwiesen, um eine geeignete Vermischung von Emulgator, Dispersionsmittel und Wirkstoffen zu erreichen und die Zerkleinerung dieser Inhaltsstoffe auf eine geeignete Korngrösse, z.B. in einer Hammermühle oder Kugelmühle, zu erleichtern. Dieses Trägermaterial kann entweder ein Feststoff oder eine Flüssigkeit sein. Zu Formulierungen des ersteren Typs gehören netzbare Pulver wie diejenigen, die in der US-PS-3 737 551 diskutiert werden, obwohl auch andere Arten fester Formulierungen, etwa das in Wasser dispergierbare Granulat der US-PS-3 920 442, vorgeschlagen wurden, um die mit der Handhabung feiner Pulver verbundenen Nachteile zu überwinden. Zu dem letzteren Typ von Formulierungen gehören fliessfähige Stoffe, in denen das Hauptdispersionsmedium Wasser ist, wie diejenigen, die in der US-PS-3 060 084 offenbart wurden. Typische Vertreter derartiger Produkte sind das Herbizid SENCOR, vertrieben von der Mobay Chemical Corporation, das Insektizid SEVIN, vertrieben von der Union Carbide und das Insektizid FURADAN, vertrieben von FMC.

Es sind auch Formulierungen verfügbar, in denen der «Wirkstoff» in einem Erdöldestillat dispergiert ist. Normalerweise sind solche Formulierungen nicht mit Wasser verdünnbar, sondern sie finden Anwendung in den Anwendungsverfahren für kleine oder äusserst kleine Volumina (low or ultralow volume applications). Typische Vertreter solcher Produkte sind das ölige Insektizid SEVIN, vertrieben von der Union Carbide und das ölige Insektizid DYLOX 1,5, vertrieben von der Mobay Chemical Corporation. Letzteres Produkt ist insofern von Interesse, als sein Wirkstoff auch in einer Formulierung als wasserlösliches Pulver erhältlich ist.

Nicht alle als Pestizide wirksamen Verbindungen lassen sich als fliessfähige Zubereitung auf der Basis von Wasser formulieren. Insbesondere kann es vorkommen, dass die Verbindung keine Langzeitbeständigkeit in Gegenwart von Wasser besitzt, sondern Hydrolyse erleidet, oder aber es kann schwierig sein, beständige Dispersionen mit geeigneten Viskositäten herzustellen. In solchen Fällen können die Verbindungen in einem organischen Lösungsmittel aufgelöst werden, das ausserdem einen Emulgator enthält, jedoch wird in solchen Fällen die Stabilität der Lösung problematisch. Falls die Konzentration der Lösung hinreichend hoch ist (und aus wirtschaftlichen Gründen besteht Veranlassung, das biologisch unwirksame Lösungsmittel in geringstmöglicher Menge einzusetzen), kann bei Temperaturen, wie sie normalerweise im Freien herrschen, Kristallisation eintreten und eine Wiederauflösung nicht in einfacher Weise zu erreichen sein. Eine derartige Kristallisation kann ebenfalls auftreten, wenn die Formulierung mit kaltem Wasser vereinigt wird, was eine Verstopfung der Transportleitungen oder Sprühdüsen der für den Einsatz verwendeten Geräte zur Folge hat. Ausserdem besteht die Möglichkeit, dass diese als Verdünnungsmittel benutzten Lösungsmittel die Formulierung unverträglich mit anderen Pestiziden machen, mit denen sie vorteilhafterweise zur Anwendung gebracht werden soll. Schliesslich verursachen viele der Lösungsmittel, die für viele wirksame Verbindungen von Interesse sind, auch Umweltprobleme.

Wie oben erörtert wurde, wurden Formulierungen in solchen Medien hergestellt, in denen die

wirksamen Verbindungen nahezu völlig unlöslich sind (weniger als 100 ppm wird gewöhnlich empfohlen), jedoch sind diese Medien, zum Nachteil vieler derartiger Verbindungen, nicht in einfacher Weise mit Wasser emulgierbar. Eine interessante Ausnahme ist die Formulierung des Insektizids Sevin und eines Dispergiermittels in Melasse, von der angenommen wird, dass sie, wiewohl mit Wasser mischbar, keine Löslichkeit für den Wirkstoff besitzt. Andererseits bewirken viele derjenigen Medien, die eine geeignete Verträglichkeit mit Wasser zeigen, und insbesondere solche, die mit Wasser mischbar sind, auch eine hinreichend hohe Solvatisierung derjenigen Wirkstoffe, die von wirtschaftlichem Interesse sind, um das Problem der «Ostwald-Reifung» auszulösen. Diese Erscheinung, die auf dem Gebiet photographischer Emulsionen ausgenutzt wird, tritt auf, wenn die kleineren Teilchen in einer Suspension sich in dem suspendierenden Medium auflösen und danach an den grösseren Teilchen auskristallisieren, wodurch die mittlere Teilchengrösse der Suspension erhöht wird, bis diese schliesslich unbeständig wird und einen Niederschlag bildet, der sich von dem Medium trennt. Jedoch wurde eine Formulierung, von der angenommen wird, dass sie aus Metribuzin und Ligninsulfonat als Dispergiermittel in einem Medium aus Wasser/Propylenglykol (6:1) besteht, auf den Markt gebracht und scheint eine beständige Dispersion zu bilden, trotz der Löslichkeit des Metribuzins in Wasser von 1200 ppm.

Nunmehr wurde eine Methode entwickelt, um diese Erscheinung zu unterdrücken und um beständige Suspensionen solcher pestizid wirksamer Verbindungen herzustellen, die bei 40 °C nur zu weniger als 2 Gewichtsteilen in 98 Gewichtsteilen Propylenglycol löslich sind.

Das in den erfindungsgemässen Mitteln enthaltene Propylenglycol wurde bereits als Träger oder Verdünnungsmittel für biologisch wirksame Stoffe verwendet.

In der US-PS 4 000 258 werden Suspensionen eines als Insektizid wirksamen Mikroorganismus in verschiedenen Alkoholen offenbart. Der spezielle Einsatz von Propylenglycol wird jedoch nicht erwähnt. In einigen Fällen enthalten die dort beschriebenen Suspensionen auch oberflächenaktive Mittel, welche die Dispergierbarkeit in Wasser unterstützen oder die Neigung der Suspension zum Absetzen vermindern. Der suspendierte Wirkstoff liegt in fein verteilter Form vor. Über seine Löslichkeit in dem Träger werden allerdings keine Angaben gemacht.

Ein Artikel in Toxicology and Applied Pharmacology, 47, 451 bis 460 (1979) berichtet über die Verwendung von Propylenglykol, um eine Vielfalt von Insektiziden für einen 24stündigen Einwirkungstest zu «suspendieren». Es wird berichtet, dass einige der «suspendierten» Insektizide mit Propylenglykol mischbar sind, während für andere keine Angaben über ihre Löslichkeit in diesem Lösungsmittel gemacht werden. Es scheint jedoch keinerlei Erkenntnis darüber vorzuliegen, dass Dispergiermittel und inerte Füllstoffe mit einem festen Wirkstoff kombiniert werden können und dadurch eine Suspension hergestellt werden kann, die bei Verwendung eines flüssigen Mediums, in dem der Wirkstoff die oben angegebene Löslichkeit aufweist, Langzeitbeständigkeit besitzt.

Ein besonders günstiges Insektizid, das diese Probleme aufwirft, ist Azinphos-Methyl, das in der US-PS 2 758 115 offenbart wurde. Bei diesem Wirkstoff handelt es sich um das 0,0-Dimethyl-S-(4-oxo-1,2,3-benzotriazin-3 (4H)-yl)-methyl-phosphordithioat der Formel

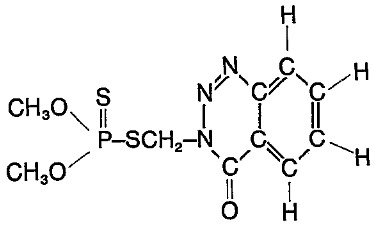

Formulierungen dieser in aromatischen Erdölfraktionen gelösten Verbindung verlieren ihre Kaltlagerbeständigkeit bei Temperaturen zwischen 15 °C und 0 °C und neigen zur Kristallisation, wenn sie mit Wasser bei Temperaturen unterhalb von etwa 15 °C vereinigt werden. Weiterhin sind diese Formulierungen für eine Kombination nach dem Tankmischverfahren mit anderen Pestiziden unverträglich, die bei der Agentur für Umweltschutz (EPA) in den USA für die gleichen Feldfrüchte registriert sind, wie dem Fungizid BRAVO 6, vertrieben von Diamond Shamrock, und dem Fungizid BENLATE 50, vertrieben von DuPont, obwohl diese selbe Verbindung, wenn sie als netzbares Pulver formuliert ist, mit denselben Pestiziden verträglich ist. Andererseits ist diese Formulierung als netzbares Pulver mit solchen Pestiziden wie dem Insektizid BOLSTAR 6, vertrieben von der Mobay Chemical Corporation, das für Baumwolle ebenso wie Azinphos-Methyl geeignet ist, unverträglich.

Die vorliegende Erfindung betrifft nun lagerbeständige, fliessfähige, mit Wasser emulgierbare Pestizid-Suspensionen, enthaltend

a) in 100 Teilen der Suspension mindestens 2,5 Teile einer biologisch wirksamen pestiziden Verbindung, die teilweise in Wasser unlöslich oder gegen Wasser empfindlich ist, die ferner bei Temperaturen unterhalb von 50 °C ein Feststoff ist, und eine solche Korngrössenverteilung besitzt, dass nicht mehr als 5% der Teilchen grösser als 12 µm sind, wobei die pestizide Verbindung ausserdem bei 40 °C zu weniger als 2 Gewichtsteilen in 98 Gewichtsteilen Propylenglycol löslich ist,
b) Propylenglycol als organisches Lösungsmittel, das die kontinuierliche Phase der Suspension bildet, wobei eine solche Menge an Lösungsmittel anwesend ist, dass die Suspension mit einer Viskosität zwischen 400 und 5000 cP bei 20 °C ausgestattet ist,
c) ein Ionen-tragendes Dispergiermittel, das bei Temperaturen unterhalb von 50 °C fest ist, das ferner eine solche Korngrössenverteilung besitzt, dass weniger als 5% der Teilchen grösser als 12 µm sind, und das chemisch inert gegenüber der wirksamen pestiziden Verbindung und dem Lösungsmittel ist, wobei eine solche Menge des Dispergiermittels anwesend ist, dass eine Agglomeration der Teilchen der wirksamen pestiziden Verbindung verhindert wird und das Teilchenwachstum der wirksamen pestiziden Verbindung unterdrückt wird, und

d) auf 100 Teile der wirksamen pestiziden Verbindung 25 bis 100 Teile inertes Füllmittel, das bei Temperaturen unterhalb von 50 °C fest ist, das in dem Lösungsmittel eine Löslichkeit von weniger als 100 ppm besitzt, das chemisch inert gegenüber der wirksamen pestiziden Verbindung, dem Lösungsmittel und dem Dispergiermittel ist, und eine solche Adsorptionskapazität besitzt, dass jede andere gegebenenfalls in der Suspension vorhandene Flüssigkeit als das Lösungsmittel adsorbiert wird, wobei soviel inertes Füllmittel vorhanden ist, dass die Stabilität der Suspension gegenüber einer Abscheidung mindestens 3 Tage bei –5 °C aufrechterhalten wird.

Die Erfindung betrifft ausserdem ein Verfahren zur Herstellung der oben genannten Suspensionen, welches darin besteht, dass man

a) eine biologisch wirksame pestizide Verbindung, die bei Temperaturen unterhalb von 50 °C ein Feststoff ist, gegebenenfalls in Gegenwart eines Mahlhilfsstoffes so zerkleinert, dass nicht mehr als 5% der Teilchen eine Grösse oberhalb von 12 µm besitzt,

b) diese zerkleinerte biologisch wirksame pestizide Verbindung mit einer solchen Menge eines unterhalb von 50 °C festen inerten Füllmittels vereinigt, welches eine solche Adsorptionskapazität besitzt, dass Adsorptionskapazität für gegebenenfalls während der Zerkleinerung schmelzende Teile der biologisch wirksamen pestiziden Verbindung und für gegebenenfalls vorhandene niedrig schmelzende Verunreinigungen verfügbar ist,

c) eine solche Menge eines unterhalb von 50 °C festen Ionen-tragenden Dispergiermittels hinzufügt, dass sichergestellt ist, dass die gesamte Suspension bei −5 °C mindestens 3 Tage stabil bleibt, und

d) diese Feststoffe in einer solchen Menge an Propylenglycol suspendiert, dass mindestens 2,5 Teile der biologisch wirksamen pestiziden Verbindung in 100 Teilen der Suspension enthalten sind, und dass die Suspension bei 20 °C mit einer Viskosität zwischen 400 und 5000 cP ausgestattet ist.

Bevorzugt sind erfindungsgemässe Mittel, die den Wirkstoff und Propylenglycol in einem Verhältnis zwischen 1:18 und 1:4 enthalten, wobei die vereinigte Menge an Füllmitteln und Dispergiermitteln geringer ist als die Menge an Wirkstoff. In einer besonders bevorzugten Zusammensetzung hat auch das inerte Füllmittel eine Korngrössenverteilung, bei der nicht mehr als 5% der Teilchen grösser als 12 µm sind.

Die biologisch wirksame Verbindung, die in den erfindungsgemässen Mitteln vorhanden ist, weist einen Schmelzpunkt oberhalb von 50 °C auf, ist in Wasser teilweise unlöslich oder verhält sich bei Langzeiteinwirkung von Wasser chemisch unbeständig und besitzt in Propylenglycol die oben angegebene Löslichkeit. Die spezifische biologische Wirksamkeit dieser Verbindungen ist nicht wichtig, sondern vielmehr deren physikalische Eigenschaften. Zu den geeigneten Verbindungen gehören Insektizide wie Azinphos-Methyl und PROPOXUR, Herbizide wie METRIBUZIN und Vogel abweisende Mittel wie Methiocarb (Abschreckmittel MESUROL). Von besonderem Interesse ist das Azinphos-Methyl.

Diese Verbindungen haben die Eigenschaft gemeinsam, dass man sie nicht mit Wasser verdünnen und dadurch Formulierungen erhalten kann, die Langzeitbeständigkeit aufweisen. Die Schwierigkeit bei hydrolyse-empfindlichen Verbindungen wie Methiocarb versteht sich von selbst, aber ein mittlerer Grad von Löslichkeit in Wasser bildet ebenfalls ein Problem. Wenn die Löslichkeit zu begrenzt ist, und zwar nicht die Herstellung von Lösungen in wirtschaftlich annehmbaren Stärken aber mit Konzentrationen oberhalb von 100 ppm zu ermöglichen, neigen Suspensionen in Wasser dazu, unbeständig zu sein. Es wird angenommen, dass dieses Verhalten auf den oben diskutierten Mechanismus der «Ostwald-Reifung» zurückzuführen ist. Wegen der Transport-Lagerkosten von Zubereitungen mit hohen Wasseranteilen sind Zubereitungen mit weniger als etwa 2,5 Gewichtsprozent des Wirkstoffs nicht reizvoll. Aus diesem Grunde findet die vorliegende Erfindung besonderen Nutzen bei solchen aktiven Verbindungen, die in Propylenglycol die oben angegebene Löslichkeit besitzen.

Der Wirkstoff muss in den erfindungsgemässen Mitteln fein verteilt sein, damit er eine beständige Suspension in Propylenglycol bildet, wenn er mit dem Dispergiermittel und dem inerten Füllstoff vereinigt wird. Besonders vorteilhaft ist es, wenn nicht mehr als 40% der Teilchen eine Grösse oberhalb von 8 µm, vorzugsweise 4 µm, besitzen.

Der Wirkstoff kann durch jede der dafür bekannten Arbeitsweisen zerkleinert werden, wie das Vermahlen in einer Hammermühle, Luft(Strahl)-mühle, Kugelmühle, Perlmühle, Behandlung in einem Attritor (Reibmühle) und mittels einer Sandmühle, wie in der US-PS 2 581 414 beschrieben wird. Wenn die Verbindung einen so niedrigen Schmelzpunkt besitzt, dass ein Teil von ihr während der Zerkleinerung schmelzen kann, wird gewöhnlich ein Mahlhilfsstoff eingesetzt. Dieser besteht typischerweise aus einem teilchenförmigen Material mit einem höheren Schmelzpunkt und einem hohen Oberflächen-Adsorptionsvermögen, beispielsweise einem Siliciumdioxid, das bis zu dem Fünffachen seines eigenen Gewichts absorbieren kann, Diatomeenerde, Fullererde oder Bentonit. Das Oberflächen-Adsorptionsvermögen und die Menge sollten abgestimmt sein auf den als wahrscheinlich zu erwartenden Grad des Schmelzens und die Anwesenheit irgendwelcher

Verunreinigungen, die dem Wirkstoff von Anfang an als Ergebnis seiner industriellen Herstellung beigemischt sind.

Dieser Mahlhilfsstoff kann zweckmässigerweise einen Teil des inerten Füllmaterials beisteuern, das zur Aufrechterhaltung der Stabilität der Suspension erforderlich ist, aber es wird bevorzugt, den Gehalt an solchen adsorptionsfähigen Stoffen möglichst gering zu halten, um eine Adsorption überschüssiger Mengen des Suspensionsmediums zu vermeiden. Die nötige Menge kann dadurch vermindert werden, dass man die wirksame Verbindung nach bekannten Arbeitsweisen, wie Umkristallisation, reinigt.

Man kann ohne den «Mahlhilfsstoff» auskommen, wenn der Wirkstoff genügend rein ist, und wenn er geeignete physikalische Eigenschaften besitzt, insbesondere einen genügend hohen Schmelzpunkt, der die geforderte Zerkleinerung ermöglicht. Ein Beispiel für eine solche Verbindung ist Metribuzin mit einem Schmelzpunkt von 125 °C. Andererseits wird eine Verbindung wie Azinphos-Methyl mit einem Schmelzpunkt von 73 °C in reinem Zustand vorteilhaft mit Hilfe eines solchen Mahlhilfsstoffs zerkleinert.

Das in den erfindungsgemässen Mitteln vorhandene organische Lösungsmittel Propylenglycol besitzt, – wie oben angegeben –, ein begrenztes Lösevermögen für den Wirkstoff und ist mit Wasser leicht emulgierbar bzw. mischbar. Ferner ist das Lösungsmittel Propylenglycol chemisch inert gegenüber dem Wirkstoff und besitzt eine minimale Wirkung auf die Umwelt, auf die die Formulierung angewandt werden soll.

Als Dispergiermittel kommen im Falle der erfindungsgemässen Mittel solche Materialien in Betracht, die ionische Gruppen, insbesondere anionische Gruppen, tragen, bei Temperaturen unterhalb von 50 °C fest sind, eine solche Korngrössenverteilung aufweisen, dass weniger als 5% der Teilchen grösser als 12 µm sind und die chemisch inert gegenüber der wirksamen pestiziden Verbindung und dem Lösungsmittel sind. Diese Materialien sind in der Lage, die Kohäsion zwischen den Teilchen herabzusetzen und insbesondere die Dispersion unlöslicher Feststoffe in Wasser zu unterstützen. Bevorzugt einsetzbar sind die Ligninsulfonate, die Metallsalze von Naphtylensulfonsäure-Formaldehyd-Kondensaten und carboxylierte Polyelektrolyte. Diese «Dispergiermittel» sind von den sogenannten «Netzmitteln» oder «Emulgatoren» zu unterscheiden, deren Hauptzweck darin besteht, die Oberflächenspannung zwischen Wasser und einem hydrophoben Feststoff herabzusetzen. Obwohl «Dispergiermittel», die diese Wirkung besitzen, geeignet sein können, werden sie auf dieser Grundlage nicht ausgewählt, und es wird bevorzugt, dass die «Dispergiermittel» keine nennenswerte Wirkung auf diese Oberflächenspannung ausüben. Den Ligninsulfonaten wird besonderer Vorzug gegeben, und unter diesen den Alkalimetallsulfonaten und ganz besonders den Natriumsulfonaten.

Die erforderliche Menge des Dispergiermittels hängt von der Löslichkeit des Wirkstoffs in dem Suspensionsmedium und der Menge des inerten Verdünnungsmittels oder Füllstoffs ab, die zur Anwendung gelangen. Je höher die Löslichkeit oder je niedriger der Füllstoffgehalt, desto mehr Dispergiermittel ist erforderlich, um eine stabile Suspension aufrecht zu erhalten. Naturgemäss muss auch die Wirksamkeit des Dispergiermittels pro Gewichtseinheit in Betracht gezogen werden. Im allgemeinen haben sich zwischen etwa 1 und 5%, bezogen auf das Gewicht der Feststoffe (Wirkstoff, Dispergiermittel, inerter Füllstoff und irgendwelche anderen Zusatzstoffe), als geeignet erwiesen. Jedoch kann eine geeignete Menge für jedes vorgegebene System in einfacher Weise durch Befolgen der Gedanken der vorliegenden Erfindung und Prüfen von Formulierungen mit wachsenden Mengen bis zum Erreichen einer stabilen Suspension festgelegt werden.

Das in den erfindungsgemässen Mitteln vorhandene Füllmittel kann aus einer Komponente oder auch aus mehreren Komponenten bestehen. Sind mehrere Komponenten enthalten, so können sie sich in ihrer Oberflächen-Adsorptionskapazität unterscheiden. Ein Teil des Füllmittels kann als Mahlhilfsstoff fungieren.

Als inertes Füllmittel oder Verdünnungsmittel kann im Prinzip jeder bei Temperaturen unterhalb von 50 °C feste Stoff eingesetzt werden, der gegenüber den anderen Inhaltsstoffen inert ist und in dem Lösungsmittel eine Löslichkeit von weniger als 100 ppm besitzt. Er sollte vorzugsweise einen so hohen Schmelzpunkt aufweisen, dass ein Schmelzen während des normalen Mahlens oder anderer mechanischer Zerkleinerungsprozesse vermieden wird, und es wird besonders bevorzugt, dass er sich leicht bei Raumtemperaturen zekleinern lässt. Er kann von vornherein in einem so fein verteilten Zustand erhalten werden, dass er eine stabile Dispersion in dem suspendierenden Medium bildet, oder er kann zusammen mit dem Wirkstoff zerkleinert werden.

Ein Teil dieses inerten Füllstoffs kann mit einem hohen Oberflächen-Adsorptionsvermögen ausgestattet sein, das zweckmässig definiert wird als das Gewicht derjenigen Stoffe, die der Füllstoff adsorbieren kann, bezogen auf sein eigenes Gewicht. Geeignete Materialien reichen von den Siliciumoxiden mit einer sehr hohen spezifischen Oberfläche, die bis zu dem Fünffachen ihres eigenen Gewichts adsorbieren können, über die Diatomeenerden und Fullererden, die Absorptionsmittel auf Tonbasis zu den Bentoniten, die etwa 20% ihres Eigengewichts absorbieren. Die Menge eines solchen Materials sollte begrenzt sein, weil es oft sowohl das suspendierende Medium als auch die Verunreinigungen und geschmolzenen Wirkstoff adsorbieren kann. Es wird bevorzugt, dass die Menge derartiger Materialien auf die benötigte Adsorptionskapazität abgestimmt wird. Dies besagt offensichtlich, dass weniger eines höher adsorptiven Materials verwendet werden kann. Naturgemäss braucht bei relativ reinen, hoch schmelzenden Wirkstoffen wie Metribuzin (125 °C) überhaupt kein adsorptionsfähiges Füllmaterial verwendet zu werden. Bei den Verbindungen mit

niedrigerem Schmelzpunkt wie Azinphos-Methyl (73 °C) ist es zweckmässig, mindestens soviel Adsorptionsmittel zu verwenden, dass es die Gesamtmenge der Verbindung aufzunehmen vermag, insbesondere, wenn diese noch Verunreinigungen von ihrer Synthese her enthält. Als besonders geeignet hat sich eine Menge von 25–100 Teilen auf 100 Teile des Wirkstoffs eines Siliciumoxids mit hoher spezifischer Oberfläche erwiesen. Derartige Materialien mit hohem Adsorptionsvermögen werden vom Standpunkt der Minimierung der Menge inaktiver Verbindungen in der Formulierung bevorzugt, aber solchen Erwägungen können die höheren Kosten der Stoffe mit höherem Adsorptionsvermögen entgegenstehen.

Die abgestimmte Menge des inerten Füllstoffs braucht keine besonderen Eigenschaften aufzuweisen, abgesehen davon, dass es sich um ein festes inertes Verdünnungsmittel für den Wirkstoff handelt. Es wird jedoch bevorzugt, dass er so preisgünstig wie möglich und chemisch inert gegenüber der zu behandelnden Umgebung ist. Zu derartigen Stoffen zählen Talkumarten, Kaolin und andere nicht adsorbierende Tone ebenso wie die Siliciumoxide mit niedriger spezifischer Oberfläche.

Die anzuwendende Menge des inerten Füllstoffs hängt von der Art des zu suspendierenden Wirkstoffs, der Menge des angewandten Dispersionsmittels und der benötigten Menge des adsorbierenden Füllmaterials ab. Je niedriger die Löslichkeit des Wirkstoffs in dem Medium ist, desto niedriger sind die erforderlichen Mengen sowohl des Verdünnungsmittels als auch des Dispergiermittels, und dies trifft besonders dann zu, wenn das suspendierende Medium den Wirkstoff nicht benetzt. In genügend hohen Mengen kann das Dispergiermittel gleichermassen als Verdünnungsmittel oder inerter Füllstoff dienen, aber dieses ist im allgemeinen nicht wirtschaftlich reizvoll und kann ausserdem deshalb unzweckmässig sein, weil das biologisch inerte Verhalten mancher Dispergiermittel bei höheren Konzentrationen verloren geht. Erfindungsgemäss beträgt die Menge des inerten Füllstoffs, einschliesslich des adsorptionsfähigen Füllstoffs, 25 bis 100 Teile pro 100 Teile des Wirkstoffs.

Die Suspensionen der vorliegenden Erfindung können auch andere Inhaltsstoffe enthalten, die gemäss dem Stand der Technik von Pestizid-Formulierungen bekannt sind. Sie können insbesondere ein Netzmittel oder einen Emulgator enthalten, der von dem geforderten Dispergiermittel zu unterscheiden ist. Diese Netzmittel sind für ihre Fähigkeit bekannt, die Oberflächenspannung zwischen Wasser und einer hydrophoben Phase zu erniedrigen. Typischerweise sind sie bei Raumtemperatur flüssig und umfassen die Detergentien, die sowohl hydrophile als auch lipophile Teile in ihren Molekülen besitzen. Obwohl allgemein bekannt ist, dass diese Netzmittel eine Wirkung erzeugen, die derjenigen eines Dispergiermittels entgegengesetzt ist, gibt es einige Verbindungen, die bis zu einem gewissen Grade beide Wirkungen hervorrufen. Solche Verbindungen können als das benötigte Dispergiermittel gemäss der vorliegenden Erfindung eingesetzt werden. Jedoch zeigten Netzmittel im allgemeinen eine nachteilige Wirkung auf die dispergierende Wirkung des Dispergiermittels in Wasser und sollten so gewählt werden, dass sie die Beständigkeit der Suspension nach der Emulgierung mit Wasser nicht nachteilig beeinflussen. Da solche Mittel nicht dazu bestimmt sind, die Oberflächenspannung des suspendierenden Mediums zu beeinflussen, wird angenommen, dass die Suspensionen derartige Inhaltsstoffe problemlos ertragen können. Im allgemeinen können Mengen bis hinauf zu der Menge des Dispergiermittels ohne weiteres verwendet werden, obwohl tatsächlich ein solcher Stoff nicht erforderlich ist. Mengen zwischen etwa 1 und 5 Teilen auf 100 Teile des Wirkstoffs sind geeignet. Die gesamte Formulierung ist vorzugsweise bei Zimmertemperatur gut fliessfähig. Sie enthält mindestens 2,5 Teile Wirkstoff auf 100 Teile der Formulierung.

Die erfindungsgemässen fliessfähigen Suspensionen besitzen eine Viskosität von weniger als 5000 cP bei 20 °C, vorzugsweise zwischen 400 und 2000 cP. Jedoch sollte die Viskosität auf die Menge und die Eigenart sowohl des Wirkstoffs als auch der anderen festen Inhaltsstoffe abgestimmt werden.

Einige der Suspensionen gemäss der vorliegenden Erfindung können thixotrop sein, so dass sie vor der Anwendung einer Scherkraft, wie z.B. Schütteln, pastös sind.

Bei der Durchführung des erfindungsgemässen Verfahrens kann die biologisch wirksame Verbindung entweder in einem Schritt oder durch aufeinander folgende Zugabe mit dem inerten Füllmittel, dem Dispergiermittel und Propylenglycol vereinigt werden. Der inerte Füllstoff wird im allgemeinen bereits in der gewünschten Korngrössenverteilung eingesetzt. Er kann jedoch auch gemeinsam mit dem Wirkstoff zerkleinert werden. Der Wirkstoff wird vorzugsweise entweder vor der Vereinigung mit dem Propylenglycol gereinigt, oder ein Teil des inerten Füllstoffs wird mit einer solchen Oberflächen-Adsorptionskapazität ausgestattet, dass gegebenenfalls im Wirkstoff vorhandene Verunreinigungen adsorptiv gebunden werden. Die Arbeitsgänge der Zerkleinerung und der Vereinigung der Komponenten werden vorzugsweise so durchgeführt, dass ein Schmelzen des Wirkstoffs vermieden wird. Ist letzteres nicht möglich, so wird soviel inerter Füllstoff mit Oberflächen-Adsorptionsvermögen eingesetzt, dass sämtlicher geschmolzener Wirkstoff aufgenommen werden kann.

Die erfindungsgemässen Suspensionen sind beständig sowohl gegenüber Langzeiteinwirkung erniedrigter Temperaturen als auch gegenüber der Einwirkung von Zyklen aus solchen erniedrigten Temperaturen und den höchsten Temperaturen, die im Freien auftreten. Diese beiden Kriterien sind unabhängig voneinander, und das eine kann erfüllt sein, während das andere nicht erfüllt wird.

Es wird angenommen, dass bei Erniedrigung der Temperatur die damit verbundene Verringerung der Löslichkeit des Wirkstoffs das Auskristallisieren eines Teils desselben aus der Lösung bewirkt und dass ein solches Kristallwachstum an sich oder dessen Keimbildung auf den suspendierten Teilchen des Wirkstoffs genügen können, die Suspension zu destabilisieren. Aber selbst wenn die Kristallisation eines Teils des Wirkstoffs in der Lösung zu Beginn nicht ausreicht, eine Destabilisierung zu bewirken, so wird doch angenommen, dass ein Wiedererwärmen der Suspension nach einer derartigen Kristallisation das Auflösen kleinerer suspendierter Teilchen des Wirkstoffs verursachen kann. Ein Teil dieses wieder aufgelösten Materials kann dann beim Kühlen wieder kristallisieren. Da die Keimbildung solcher Teilchen auf bereits existierenden Teilchen begünstigt wird, besteht das Gesamtergebnis in einer Veränderung der Teilchengrössenverteilung zu grösseren Teilchen hin, bis die Suspension destabilisiert wird.

Die erstgenannte Eigenschaft kann in einfacher Weise durch Lagerung bei −6,7 °C oder 0 °C (20°F oder 32°F) über Zeiträume von 3 Tagen bis hinauf zu einem Jahr ermittelt werden, während die letztere durch Zyklen ermittelt werden kann, bei denen Lagerung bei derartigen erniedrigten Temperaturen über Zeiträume von 3 Tagen an aufwärts, Erhitzen auf Raumtemperatur (z.B. 20 °C) und Rückkehr zu den kälteren Temperaturen erfolgt. Eine derartige Mindestlagerzeit bei niedrigen Temperaturen ist wichtig, da infolge von Temperaturerniedrigungen nicht nur die Löslichkeit erniedrigt wird, sondern auch die kinetische Geschwindigkeit, mit der das Kristallwachstum stattfindet. Aus diesem Grunde kann eine Suspension, die bei einer vorgegebenen Temperatur nicht beständig ist, eine Kurzzeitstabilität zeigen, weil die Zeit dafür nicht ausreicht, dass das Gleichgewicht erreicht wird.

Der letzte Test entspricht naturgemäss dem Verlauf der thermischen Beeinflussung, die ein formuliertes Pestizid bei der praktischen Anwendung erfährt, d.h. den Temperaturzyklen, die tatsächlich im Freien auftreten.

Das Bedürfnis nach Beständigkeit über einen Temperaturbereich hinweg besagt, dass die Viskosität so eingestellt werden muss, dass der für die Beständigkeit benötigte Mindestwert über diesen selben Bereich aufrechterhalten wird. Typischerweise, jedoch nicht immer, nimmt die Viskosität mit zunehmender Temperatur ab, so dass die Formulierung diese Viskosität bei der höchsten Temperatur, der die Suspension ausgesetzt wird, besitzen muss. Wenn das suspendierende Medium mit dem Wirkstoff vereinigt wird, bevor der Wirkstoff zerkleinert wird, kann dies die Temperatur sein, die während oder unmittelbar nach der Zerkleinerung auftritt. Diese Viskosität hängt von den relativen Dichten des suspendierenden Mediums und der festen Inhaltsstoffe ab. Wenn diese einander relativ gut angepasst sind, kann eine relativ niedrige Viskosität ausreichend sein. Andererseits kann ein deutliches Missverhältnis etwas höhere Viskositäten erfordern, z.B. Azinphos-Methyl mit einer Dichte von mehr als 1,198 g/cm³ (10 lb/gallon), suspendiert in Propylenglycol, das eine Dichte von 1,030 g/cm³ (8,6 lb/gallon) besitzt.

Diese Viskosität kann zweckmässigerweise durch andere feste Inhaltsstoffe der Formulierung als den Wirkstoff gesteuert werden. Vorzugsweise wird sie hauptsächlich durch die Menge und die Art des inerten Füllstoffs beeinflusst. Wie weiter oben erörtert, können die adsorptionsfähigen Füllstoffe einen Teil des suspendierenden Mediums adsorbieren und auf diese Weise die Viskosität wirksam erhöhen. Die Teilchengrössenverteilung sämtlicher fester Inhaltsstoffe kann ebenfalls einen Einfluss haben, weil im allgemeinen die spezifische Oberfläche und die Viskosität der Suspension für dasselbe Teilchenvolumen desto höher sind, je niedriger die Teilchengrösse ist. Jedoch wird die Teilchengrösse in erster Linie nach dem Prinzip ausgewählt, dass kleinere Teilchen im allgemeinen sich gegenüber einem Absetzen beständiger verhalten. Die Verwendung anderer Zusatzstoffe wie Verdicker wird, wiewohl nicht bevorzugt, nicht ausgeschlossen.

Eine besonders bevorzugte Suspension wird aus Azinphos-Methyl in Propylenglycol gebildet. Solche Suspensionen können Viskositäten oberhalb von 600 cP bei 20 °C und Teilchengrössenverteilungen mit 60% unterhalb von 4 µm und weniger als 5% oberhalb von 12 µm besitzen. Die Formulierung enthält ebenfalls ein Dispergiermittel, einen adsorptionsfähigen inerten Füllstoff und einen nicht-adsorptionsfähigen inerten Füllstoff. Eine besonders bevorzugte Version benutzt ein festes ionisches Dispergiermittel wie ein Natrium-Lignosulfonat, ein Siliciumoxid mit hoher spezifischer Oberfläche und einen nicht-adsorbierbaren Ton wie Barden-Ton. Das Dispergiermittel wird in einer Menge zwischen 2 und 6 Teilen auf 100 Teile Azinphos-Methyl verwendet, und das adsorptionsfähige Siliciumoxid wird in einer Menge zwischen 15 und 50 Teilen auf 100 Teile Azinphos-Methyl verwendet.

Die Suspension enthält ebenfalls zwischen 20 und 40 Teile Azinphos-Methyl auf 100 Teile der Gesamtformulierung und zwischen 30 und 70 Teile auf 100 Teile Propylenglycol. Solche besonders bevorzugten Suspensionen können bis zu einem Jahr bei −17,8 °C (0°F) beständig sein und ebenfalls ein Jahr, wenn sie dem Temperaturprofil des Temperaturgebietes der Vereinigten Staaten ausgesetzt werden.

Die vorliegende Suspension ist mit einer Anzahl anderer formulierter Wirkstoffe gut verträglich, auch dann, wenn sie in grossen Mengen Wasser miteinander vereint werden («Tankmischverfahren»). Sie kann ebenfalls mit kaltem (0 °C) Wasser vereinigt werden, ohne dass Kristallisation stattfindet. Sie bleibt ebenfalls gut giessfähig bei Temperaturen deutlich unterhalb von 0 °C.

Die Erfindung wird durch die folgenden Beispiele weiter erläutert, in denen sämtliche Angaben von Teilen und Prozentzahlen sich, sofern nicht anders vermerkt, auf das Gewicht beziehen.

Beispiele

Beispiel 1

Ein insektizides Mittel wurde durch Vereinigen der folgenden Inhaltsstoffe hergestellt:

34,4 Teile Azinphos-Methyl,

5,0 Teile eines nicht-adsorptionsfähigen, amorphen Siliciumoxid-Verdünnungsmittels mit einer spezifischen Oberfläche von etwa 14.000 $cm^2/g$, mit einer Korngrösse unterhalb von 0,037 mm (400 mesh Taylor) (maximale Teilchengrösse $< 10\ \mu m$),

1,0 Teil Natrium-Isopropyl-Naphtalinsulfonat-Netzmittel,

1,5 Teile Natrium-Lignosulfonat-Dispergiermittel,

56,5 Teile Propylenglycol-Lösungsmittel (suspendierendes Medium).

Diese Bestandteile wurden in einem Waring-Mischer vereinigt und in einer Reitz-(Hammer)-Mühle auf eine Siebweite von 0,15 mm (0,006″) zerkleinert. Zwei aufeinander folgende Durchgänge durch eine Sandmühle mit 2 mm-Perlen lieferten ein Produkt mit einer Viskosität von 660 cP bei 20 °C und der folgenden, mit Hilfe eines Coulter-Counters bestimmten Korngrössenverteilung:

| | |
|---|---|
| 0–4 µm | 45,3% |
| 4–8 µm | 33,0% |
| 8–12 µm | 10,6% |
| > 12 µm | 6 % |

Beim Vermischen mit hartem Wasser (1000 ppm Salze) im Verhältnis 1:100 und mit weichem Wasser (100 ppm Salze) im Verhältnis 3,5:100 wurden ausgezeichnete Dispersionen erhalten.

Die Arbeitsweise wurde zweimal wiederholt, wobei ein zusätzlicher Durchgang durch die Sandmühle mit 1 mm-Perlen durchgeführt wurde. Eine der erhaltenen Dispersionen hatte eine Viskosität von 740 cP bei 20 °C, und die folgenden, mit Hilfe eines Coulter-Counters bestimmten Korngrössen-Verteilungen wurden erhalten:

| | | |
|---|---|---|
| 0–4 µm | 61,9 % | 58,4 % |
| 4–8 µm | 28,9 % | 28,6 % |
| 8–12 µm | 7,1 % | 9,1 % |
| >12 µm | 2,0 % | 3,8 % |

Bei der Lagerung, sowohl bei Raumtemperatur als auch bei etwa −6 °C, blieben diese Dispersionen stabil und zeigten nach 3 Tagen keine Anzeichen einer Niederschlagsbildung. Die bei −6 °C gelagerte Dispersion blieb auch beim Wiedererhitzen auf Raumtemperatur beständig.

Beispiel 2

Ein insektizides Mittel wurde aus den nachstehenden Inhaltsstoffen auf ähnliche Weise wie in Beispiel 1 hergestellt:

23,3 Teile Azinphos-Methyl,

5,0 Teile des gleichen Siliciumoxid-Verdünnungsmittels, das in Beispiel 1 verwendet wurde,

1,0 Teile Natrium-Isopropyl-Naphtalinsulfonat-Netzmittel,

1,5 Teile Natriumlignosulfonat-Dispergiermittel,

64,7 Teile Propylenglycol.

Die erhaltene Dispersion war sowohl bei Raumtemperatur als auch bei −6 °C und ebenfalls beim periodischen Wechsel zwischen diesen Temperaturen beständig.

Beispiel 3

Ein insektizides Mittel wurde aus den nachstehenden Inhaltsstoffen hergestellt:

21,6 Teile Azinphos-Methyl,

11,2 Teile eines Natrium-Siliciumoxid-Aluminat-Verdünnungsmittels mit einer mittleren Korngrösse von 12–20 µm und einer mittleren spezifischen Oberfläche von 180–225 $m^2/g$,

1,6 Teile eines amorphen Siliciumoxid-Verdünnungsmittels, das in Beispiel 1 verwendet wurde,

1,2 Teile Natrium-Isopropyl-Naphthalinsulfonat,

1,5 Teile Natrium-Lignosulfonat-Dispergiermittel,

3,2 Teile Barden-Ton.

Nach Zerkleinerung wurde diese Zusammensetzung mit 61,4 Teilen Propylenglycol vereinigt und in einer Sandmühle weiter zerkleinert. Diese Zusammensetzungen wurden dann auf ihre Lagerbeständigkeit dadurch untersucht, dass die Veränderung der Korngrössenverteilung und das Auftreten einer Sedimentation unter verschiedenen Bedingungen wie folgt beobachtet wurde:

| | Zu Beginn | 6 Monate bei etwa 20 °C | 6 Monate bei Umgebungstemperatur in Kansas City | 6 Monate bei −6 °C |
|---|---|---|---|---|
| Coulter-Counter-Korngrössen-Verteilung | | | | |
| 0–4 µm | 82 | 83 | 80 | 84 |
| 4–8 µm | 14 | 14 | 16 | 14 |
| 8–12 µm | 3 | 2 | 3 | 1 |
| >12 µm | 1 | 1 | 1 | 0 |
| Auftreten von Sediment | nein | nein | nein | nein |
| Thixotrope Gelbbildung | nein | ja | ja | nein |

Innerhalb der Versuchsfehler blieb die Korngrössenverteilung des Ausgangszustandes unverändert. Die thixotrope Eindickung wurde leicht dadurch beseitigt, dass der Behälter geschüttelt wurde, und daraufhin wurde die Dispersion wieder leicht giessbar.

Beispiel 4

Eine Zusammensetzung ähnlich derjenigen von Beispiel 3 wurde hergestellt und in einer ähnlichen Weise untersucht, wobei die folgenden Ergebnisse erhalten wurden:

| | Zu Beginn | 1 Jahr bei Umbegungstemperatur von Kansas City | 1 Jahr −18 °C | 4 Wochen bei 40 °C | 4 Wochen bei −18 °C | 8 Wochen bei 40 °C | 8 Wochen bei −18 °C | 16 Wochen bei 40 °C | 16 Wochen bei −18 °C |
|---|---|---|---|---|---|---|---|---|---|
| Coulter-Counter-Korngrössen-Verteilung | | | | | | | | | |
| 0–4 µm | 71 | 70 | 74 | 73 | 71 | 80 | 70 | 79 | 80 |
| 4–8 µm | 24 | 19 | 21 | 20 | 24 | 17 | 18 | 18 | 17 |
| 8–12 µm | 4 | 5 | 4 | 5 | 4 | 2 | 3 | 3 | 3 |
| > 12 µm | 1 | 6 | 1 | 2 | 1 | 1 | 0 | 0 | 0 |
| Auftreten eines Sediments | nein | nein | nein | nein | nein | nein | nein | nein | nein |
| Thixotrope Gelbbildung | nein | ja | nein | ja | nein | ja | nein | ja | nein |
| Viskosität bei 23 °C in cP | 380 | 460 | 420 | 460 | 340 | 560 | 380 | – | – |

Die Viskosität wurde nach der Brookfield-Technik mit einer Zuverlässigkeit von ±40 cP bestimmt. Die Prüfungen über den Zeitraum eines Jahres wurden in einer Polyethylen-Kanne mit einem Fassungsvermögen von 9,64 l (2½ gallon) durchgeführt, und für die Prüfungen während der kürzeren Zeiträume wurden Glasflaschen mit 0,47 l (1 pint) Fassungsvermögen verwendet.

Beispiel 5

Eine Zusammensetzung ähnlich derjenigen von Beispiel 4 wurde hergestellt und in ähnlicher Weise untersucht, ausser dass darin der Anteil gröberer Teilchen etwas höher war; dabei wurden die nachstehenden Ergebnisse erhalten:

| | Zu Beginn | 2 Monate bei 40 °C in einem Polyethylen-Eimer von 18,93 l (5 gallon) | 2 Monate bei 40 °C in einer Polyethylenkanne von 9,46 l (2½ gallon) |
|---|---|---|---|
| Coulter-Counter-Korngrössen-Verteilung | | | |
| 0–4 µm | 54 | 58 | 57 |
| 4–8 µm | 32 | 32 | 32 |
| 8–12 µm | 11 | 7 | 10 |
| > 12 µm | 2 | 1 | 1 |
| Viskosität bei 23 °C in cP | 960 | 820 | 860 |

Beispiel 6

Eine entsprechend der Formulierung von Beispiel 3 hergestellte Zusammensetzung erwies sich als gut verträglich mit den folgenden, im Handel erhältlichen landwirtschaftlichen Pestiziden:

1. Ambush 2
2. BAYCOR 50% WP
3. Benlate 50
4. BOLSTAR 6
5. Bravo 500
6. Bravo 75
7. Captan 50 W
8. Cyprex 65–Add Ortho X–77
9. DEF
10. Duter
11. DYRENE 50% WP
12. Fundal 4
13. Galecron 4
14. Maneb
15. Pounce 3.2
16. Pydrin 2.4 EC
17. Harvade
18. Orthene 75 SP
19. BOLSTAR + Fundal
20. BOLSTAR + Galecron

Beispiel 7

Eine entsprechend Beispiel 3 formulierte Zusammensetzung wurde auf eine Vielfalt landwirtschaftlicher Nutzfrüchte allein und in Kombination mit einer Vielfalt anderer landwirtschaftlicher Pestizide aufgebracht. Die Bekämpfungswirkung war ebenso gut wie und die Phytotoxizität nicht schlechter als bei anderen, im Handel erhältlichen Formulierungen von Azinphos-Methyl. Unter den erfolgreich behandelten Nutzpflanzen und bekämpften Schädlingen befanden sich die folgenden:

| Nutzpflanzen | Schädlinge |
|---|---|
| Kartoffeln | Kartoffelkäfer, Kartoffelerdfloh |
| Baumwolle | Rüsselkäfer |
| Äpfel | Grüner Obstwurm |
| Kirschen | Grüner Obstwurm |
| Pfirsiche | – |
| Tomaten | – |
| Zuckerrohr | – |

Beispiel 8

Eine entsprechend Beispiel 3 formulierte Zusammensetzung wurde mit zwei handelsüblichen Azinphos-Methyl-Formulierungen auf Baumwolle und Gurken wie folgt verglichen:

Wirksamkeit

| Behandlung Wirkstoff/Dosis | | Gurken Bekämpfungswirkung (a) | | Baumwolle Baumwollkapselkäfer | |
|---|---|---|---|---|---|
| | | Spinnmilbe | grüne Pfirsichblattlaus | Bekämpfungswirkung (b) | Frassschaden |
| g/a | oz/a | % | % | % | % |
| Mittel gemäss der Erfindung | | | | | |
| 453,6 | 16 | – | 53 | – | – |
| 113,4 | 4 | 94 | 30 | 98 | 7 |
| 28,35 | 1 | 62 | 40 | 90 | 47 |
| 7,09 | 0,25 | 51 | 39 | 68 | 62 |
| 1,70 | 0,06 | 27 | – | 50 | 62 |
| 0,43 | 0,015 | – | – | 0 | 97 |
| Guthion 2L* | | | | | |
| 453,6 | 16 | – | 55 | – | – |
| 113,4 | 4 | 99 | 20 | 100 | 23 |
| 28,35 | 1 | 99 | 27 | 90 | 43 |
| 7,09 | 0,25 | 80 | 30 | 50 | 91 |
| 1,70 | 0,06 | 52 | – | 44 | 85 |
| 0,43 | 0,015 | – | – | – | 90 |
| Guthion 50WP* | | | | | |
| 453,6 | 16 | – | 0 | – | – |
| 113,4 | 4 | 76 | 0 | 98 | 7 |
| 28,35 | 1 | 56 | 0 | 93 | 7 |
| 7,09 | 0,25 | 51 | 0 | 84 | 73 |
| 1,70 | 0,06 | 10 | – | 45 | 92 |
| 0,43 | 0,015 | – | – | 0 | 97 |
| unbehandelte Kontrollgruppe | 0 | 0 | 0 | 100 | |

Anmerkungen:

(a) auf der Basis der Abbott-Formel;

(b) absolut;

* Produkte der Mobay Chemical Corporation; Registriernummern der Agentur für Umweltschutz EPA: 3125-102 und 3125-193-AA.

Phytotoxizität

| Wirkstoff | Dosis kg/a | lbs/a | Baumwolle % | Gurken % |
|---|---|---|---|---|
| Mittel gemäss der Erfindung | 7,26 | 16 | 60 | 70 |
| | 3,63 | 8 | 40 | 50 |
| | 1,81 | 4 | 20 | 30 |
| | 0,91 | 2 | 0 | 10 |
| Guthion 2L | 7,26 | 16 | 90 | 98 |
| | 3,63 | 8 | 60 | 70 |
| | 1,81 | 4 | 60 | 40 |
| | 0,91 | 2 | 40 | 30 |
| Guthion 50WP | 7,26 | 16 | 20 | 50 |
| | 3,63 | 8 | 3 | 30 |
| | 1,81 | 4 | 0 | 10 |
| | 0,91 | 2 | 0 | 10 |
| unbehandelte Kontrollgruppe | | | 0 | 0 |

Beispiel 9

Hergestellt wurde eine Zusammensetzung in einer Weise ähnlich derjenigen von Beispiel 3, jedoch mit der Abweichung, dass 4,00 Teile der Formulierung ohne Propylenglycol mit ausreichenden Mengen verschiedener organischer Lösungsmittel vereinigt wurden, so dass Dispersionen erhalten wurden, die 240 g/l (2lb/gallon) Azinphos-Methyl enthielten; diese Dispersionen wurden untersucht.

| Formulierung 4 Teile der Zubereitung aus Beispiel 3 (ohne Lösungsmittel) und Teile | Lösungsmittel | Azinphos-methyl-Löslichkeit bei 40°C ppm | Ergebnis der Untersuchung |
|---|---|---|---|
| 4,7 | Isopropylacetat | | kristallisiert nach 3 Tagen bei −6°C |
| 6,7 | Butyrolacton | $>3{,}3 \times 10^5$ | kristallisiert nach 9 Tagen bei −6°C |
| 5,6 | Cyclohexan | $>3{,}2 \times 10^5$ | kristallisiert nach 9 Tagen bei −6°C |
| 4,8 | Methylisobutylketon | $>1{,}5 \times 10^5$ | kristallisiert nach 3 Tagen bei −6°C |
| 6,3 | Tetrahydrofurfurylalkohol | | kristallisiert nach 3 Tagen bei −6°C |
| 7,5 | Glycerin | $5–10 \times 10^3$ | kristallisiert nach 3 Tagen bei −6°C. |
| 5,7 | Methylcellosolve | | kristallisiert nach 3 Tagen bei −6°C |
| 6,6 | Carbowax 200$^+$ | $1–2 \times 10^5$ | kristallisiert nach 3 Tagen bei −6°C |
| 6,1 | Propylenglycol | $1{,}5 \times 10^4$ | Langzeit-Beständigkeit |

$^+$Polypropylenglycol $M_n = 200$

Es wird angenommen, dass sämtliche Lösungsmittel ausser Glycerin bei der verwendeten speziellen Kombination aus Dispergiermittel und Verdünnungsmittel ein zu hohes Lösevermögen für das Azinphos-Methyl besitzt, als dass die Ostwald-Reifung unterdrückt werden könnte. In der Tat wird das Azinphos-Methyl von einigen der Lösungsmittel vollständig gelöst, jedoch ist die Lösung unbeständig (Butyrolacton und Cyclohexan). Wiewohl Glycerin ein geringes Lösevermögen für das Azinphos-Methyl besitzt, ist es offensichtlich unverträglich mit den normalerweise in dieser Chemikalie gefundenen Verunreinigungen.

Die Löslichkeit bei 40°C wurde als kennzeichnender Parameter gewählt, da angenommen wird, dass diese Temperatur typischerweise bei den zur Erzielung der gewünschten Korngrössenverteilung normalerweise durchgeführten Mahlvorgängen erreicht wird.

Beispiel 10

Ein insektizides Mittel wurde durch Vereinigung von 4 Teilen der folgenden handelsüblichen oberflächenaktiven Pulver mit 6,14 Teilen Propylenglycol hergestellt:

| Oberflächenaktives Pulver | Löslichkeit der technischen Chemikalie in Propylenglycol bei 40°C ppm |
|---|---|
| Atrazine 80 WP | $5–10 \times 10^3$ |
| Captan 50 | $75 \times 10^3$ |
| Imidan 50 | – |

Diese Dispersionen waren 7 Tage bei −6°C beständig.

Beispiel 11

Ein insektizides Mittel wurde durch Vereinigung der folgenden Inhaltsstoffe hergestellt:

22,2 Teile 3,5-Dimethyl-4-(methylthio)phenol-methyl-carbamat,
0,6 Teile eines Cellulosederivats als Verdikkungsmittel,
4,2 Teile Talkum,
0,6 Teile Natriumlignosulfonat-Dispergiermittel,
1,45 Teile Natriumsiliciumaluminat, mittlere Korngrösse 12–20 µm, mittlere spezifische Oberfläche 180–225 m²/g,
70,95 Teile Propylenglycol.

Die Dispersion war bei Raumtemperatur über einen längeren Zeitraum hinweg beständig, jedoch wurde nach 8 Monaten die Bildung eines Bodenkörpers beobachtet. Die wirksame Verbindung hat bei 40°C eine Löslichkeit von $> 2 \times 10^4$ ppm und bei 20°C von weniger als $1 \times 10^4$ ppm.

Es wird angenommen, dass die Bildung des Bodenkörpers auf den Talkum-Gehalt zurückzuführen ist, und es wird weiter angenommen, dass das Fortlassen dieses Bestandteils oder sein Ersatz durch ein Siliciumoxid oder einen Ton dieses Problem ausschalten würde, z.B. durch Erhöhen der Menge des Natriumsiliciumaluminats auf 5,65 Teile.

Beispiel 12

Ein insektizides Mittel wurde durch Vereinigung der folgenden Inhaltsstoffe hergestellt:

32,4 Teile Propoxur,
9,9 Teile Oxtylphenoxypolyethoxyethanol-Netzmittel mit einem HLB-Wert (hydrophilic lipophilic balance) von 13,5,
0,9 Teile Natriumlignosulfonat-Dispergiermittel mit einer Oberflächenspannung in 1%iger wässriger Lösung von 53 mN/m,
0,2 Teile Seife
3,14 Teile Barden-Ton als nicht-absorptionsfähiges Verdünnungsmittel,
6,71 Teile eines relativ gut nicht-absorptionsfähigen Natrium-Siliciumaluminat-Verdünnungsmittels mit einer mittleren Korngrösse von 12–20 µm und einer mittleren spezifischen Oberfläche von 180–225 m²/g
0,45 Teile Zitronensäure.

Diese Formulierung hatte die nachstehende Coulter-Counter-Korngrössenverteilung:

| | |
|---|---|
| 0–4 µm | 50% |
| 4–8 µm | 30% |
| 8–12 µm | 15% |
| > 12 µm | 5% |

Diese Formulierung wurde mit 53,1 Teilen Propylenglycol vereinigt, wobei eine Dispersion gebildet wurde. Diese Dispersion war noch nach 1 Jahr Lagerung bei etwa 20°C beständig.

Die Wirksamkeit der obigen Formulierung gegen deutsche Schaben (Hausschaben) auf ungestrichenem Holz wurde mit derjenigen einer handelsüblichen 70%igen nutzbaren Zubereitung des oberflächenaktiven Pulvers Propoxur mit dem folgenden Ergebnis verglichen:

Bekämpfungswirkung gegen Schaben

| Behandlung | Dosierung % | Prozentuale Bekämpfungswirkung gegen Schaben nach anfangs (0 Tage Nachwirkung) 0,5 h | 1 h | 2 h | 24 h | Nachwirkung 1 Woche 24 h | Nachwirkung 2 Wochen 24 h |
|---|---|---|---|---|---|---|---|
| Mittel gemäss der Erfindung | 1 | 60 | 73 | 87 | 100 | 88 | 8 |
| | 0.5 | 3 | 3 | 23 | 68 | 0 | – |
| | 0.25 | 0 | 0 | 0 | 0 | – | – |
| | 0.125 | 0 | 0 | 0 | 0 | – | – |
| Propoxur | 1 | 38 | 55 | 93 | 100 | 95 | 37 |
| | 0.5 | 0 | 0 | 8 | 53 | 3 | – |
| | 0.25 | 0 | 0 | 0 | 0 | – | – |
| | 0.125 | 0 | 0 | 0 | 0 | – | – |
| Unbehandelte Kontrollgruppe | | 0 | 0 | 0 | 0 | 0 | 0 |

Anwendung auf ungestrichenem Holz:
Die Löslichkeit des Propoxur in Ethylenglycol liegt bei 4°C oberhalb von $5 \times 10^3$ ppm.

**Patentansprüche**

1. Lagerbeständige, fliessfähige, mit Wasser emulgierbare Pestizid-Suspensionen, enthaltend

a) in 100 Teilen der Suspension mindestens 2,5 Teile einer biologisch wirksamen pestiziden Verbindung, die teilweise in Wasser unlöslich oder gegen Wasser empfindlich ist, die ferner bei Temperaturen unterhalb von 50 °C ein Feststoff ist, und eine solche Korngrössenverteilung besitzt, dass nicht mehr als 5% der Teilchen grösser als 12 µm sind, wobei die pestizide Verbindung ausserdem bei 40 °C zu weniger als 2 Gewichtsteilen in 98 Gewichtsteilen Propylenglycol löslich ist,

b) Propylenglycol als organisches Lösungsmittel, das die kontinuierliche Phase der Suspension bildet, wobei eine solche Menge an Lösungsmittel anwesend ist,
dass die Suspension mit einer Viskosität zwischen 400 und 5.000 cP bei 20 °C ausgestattet ist,

c) ein Ionen-tragendes Dispergiermittel, das bei Temperaturen unterhalb von 50 °C fest ist, das ferner eine solche Korngrössenverteilung besitzt, dass weniger als 5% der Teilchen grösser als 12 µm sind, und das Gemisch inert gegenüber der wirksamen pestiziden Verbindung und dem Lösungsmittel ist, wobei eine solche Menge des Dispergiermittels anwesend ist, dass eine Agglomeration der Teilchen der wirksamen pestiziden Verbindung verhindert wird und das Teilchenwachstum der wirksamen pestiziden Verbindung unterdrückt wird, und

d) auf 100 Teile der wirksamen pestiziden Verbindung 25 bis 100 Teile inertes Füllmittel, das bei Temperaturen unterhalb von 50 °C fest ist, das in dem Lösungsmittel eine Löslichkeit von weniger als 100 ppm besitzt, das chemisch inert gegenüber der wirksamen pestiziden Verbindung, dem Lösungsmittel und dem Dispergiermittel ist, und eine solche Adsorptionskapazität besitzt, dass jede andere gegebenenfalls in der Suspension vorhandene Flüssigkeit als das Lösungsmittel adsorbiert wird, wobei soviel inertes Füllmittel vorhanden ist, dass die Stabilität der Suspension gegenüber einer Abscheidung mindestens 3 Tage bei −5 °C aufrechterhalten wird.

2. Verfahren zur Herstellung der Suspensionen gemäss Anspruch 1, dadurch gekennzeichnet, dass man

a) eine biologisch wirksame pestizide Verbindung, die bei Temperaturen unterhalb von 50 °C ein Feststoff ist, gegebenenfalls in Gegenwart eines Mahlhilfsstoffes so zerkleinert, dass nicht mehr als 5% der Teilchen eine Grösse oberhalb von 12 µm besitzt,

b) diese zerkleinerte biologisch wirksame pestizide Verbindung mit einer solchen Menge eines unterhalb von 50 °C festen inerten Füllmittels vereinigt, welches eine solche Adsorptionskapazität besitzt, dass Adsorptionskapazität für gegebenenfalls während der Zerkleinerung schmelzende Teile der biologisch wirksamen pestiziden Verbindung und für gegebenenfalls vorhandene niedrig schmelzende Verunreinigungen verfügbar ist,

c) eine solche Menge eines unterhalb von 50 °C festen Ionen-tragenden Dispergiermittels hinzufügt, dass sichergestellt ist, dass die gesamte Suspension bei −5 °C mindestens 3 Tage stabil bleibt, und

d) diese Feststoffe in einer solchen Menge an Propylenglycol suspendiert, dass mindestens 2,5 Teile der biologisch wirksamen pestiziden Verbindung in 100 Teilen der Suspension enthalten sind, und dass die Suspension bei 20 °C mit einer Viskosität zwischen 400 und 5.000 cP ausgestattet ist.

3. Suspensionen gemäss Anspruch 1, dadurch gekennzeichnet, dass Azinphos-Methyl als biologisch wirksame pestizide Verbindung enthalten ist.

4. Suspensionen nach Anspruch 1, dadurch gekennzeichnet, dass das Dispergiermittel ein Alkalimetall-Lignosulfonat ist.

5. Suspensionen nach Anspruch 1, gekennzeichnet durch einen Gehalt von

a) 15,0–45,0 Teilen Azinphos-Methyl,

b) 5–10 Teilen eines Natrium-Siliciumoxid-Aluminat-Verdünnungsmittels mit einer spezifischen Oberfläche von 180–225 $m^2/g$,

c) 0–3 Teilen eines nicht-adsorptionsfähigen, amorphen Siliciumoxid-Verdünnungsmittels mit einer spezifischen Oberfläche von weniger als 14.000 $cm^2/g$,

d) 1–5 Teilen Barden-Ton,

e) 0,5–3 Teilen der zuckerfreien Sulfonate auf Natriumbasis des Kraftlignins,

f) 0–3 Teilen eines Natrium-Isopropylnaphthalinsulfonat-Netzmittels, und

g) einer solchen Menge Propylenglycol, dass in der Suspension eine Konzentration an Azinphos-Methyl von 210 g/l–540 g/l vorhanden ist, wobei nach Rühren, um eine etwaige thixotrope Gelbildung zu beseitigen, diese Suspension eine Viskosität zwischen 400 und 5.000 cP bei 20 °C besitzt und bei Temperaturen von 40 °C und 0 °C und ebenfalls beim periodischen Wechsel zwischen diesen Temperaturen mindestens ein Jahr stabil ist.

6. Suspensionen nach Anspruch 1, dadurch gekennzeichnet, dass die festen Inhaltsstoffe eine Coulter-Counter-Korngrössenverteilung wie folgt besitzen:

| | |
|---|---|
| 0–4 µm | 50–90% |
| 4–8 µm | 10–40% |
| 8–12 µm | nicht mehr als 10% |
| > 12 µm | weniger als 2%. |

**Claims**

1. Storage-stable, flowable, water-emulsifiable pesticide suspensions containing

a) in 100 parts of the suspension at least 2.5 parts of a biologically active pesticidal compound which is partly insoluble in water or sensitive to water, which is also a solid at temperatures

below 50 °C, and which has such a particle size distribution that no more than 5% of the particles are larger than 12 µm, and in addition less than 2 parts by weight of the pesticidal compound are soluble in 98 parts by weight of propylene glycol at 40 °C,

b) propylene glycol as the organic solvent, which forms the continuous phase of the suspension, such a quantity of solvent being present that the suspension is provided with a viscosity of between 400 and 5,000 cP at 20 °C,

c) an ion-bearing dispersant which is solid at temperatures below 50 °C, and which also has such a particle size distribution that less than 5% of the particles are larger than 12 µm, and which is chemically inert towards the active pesticidal compound and the solvent, such a quantity of the dispersant being present that agglomeration of the particles of the active pesticidal compound is prevented and the particle growth of the active pesticidal compounds is suppressed, and

d) per 100 parts of the active pesticidal compound 25 to 100 parts of an inert filler which is solid at temperatures below 50 °C, which has a solubility of less than 100 ppm in the solvent, which is chemically inert towards the active pesticidal compound, the solvent and the dispersant, and has such an adsorptive capacity that any other liquid which may be present in the suspension apart from the solvent is adsorbed, such a quantity of inert filler being present that the stability of the suspension is maintained against separation for at least 3 days at −5 °C.

2. Process for the preparation of suspensions according to Claim 1, characterised in that

a) a biologically active pesticidal compound which is a solid at temperatures below 50 °C is comminuted, optionally in the presence of a grinding auxiliary, in such a manner that no more than 5% of the particles have a size larger than 12 µm,

b) this comminuted biologically active pesticidal compound is combined with such a quantity of an inert filler which is solid at below 50 °C, and which has such an adsorptive capacity that an adsorptive capacity is available for any parts of the biologically active pesticidal compound which may melt during the comminution and for any low-melting impurities which may be present,

c) such a quantity of an ion-bearing dispersant which is solid at below 50 °C is added that the stability of the total suspension is ensured for at least 3 days at −5 °C, and

d) these solids are suspended in such a quantity of propylene glycol that at least 2.5 parts of the biologically active pesticidal compound are contained in 100 parts of the suspension, and that the suspension is provided with a viscosity at 20 °C of between 400 and 5,000 cP.

3. Suspensions according to Claim 1, characterised in that they contain Azinphos-methyl as the biologically active pesticidal compound.

4. Suspensions according to Claim 1, characterised in that the dispersant is an alkali metal lignosulphonate.

5. Suspensions according to Claim 1, characterised in that they contain

a) 15.0–45.0 parts of Azinphos-methyl,

b) 5–10 parts of a sodium-silicon oxide-aluminate diluent with a specific surface area of 180–225 $m^2/g$,

c) 0–3 parts of a non-adsorptive amorphous silicon oxide diluent with a specific surface area of less than 14,000 $ch^2/g$,

d) 1–5 parts of Barden clay,

e) 0.5–3 parts of the sugar-free sodium-based sulphonates of kraft lignin,

f) 0–3 parts of a sodium isopropyl naphthalene sulphonate wetting agent and

g) such a quantity of propylene glycol that a concentration of Azinphos-methylen of 210 g/l–540 g/l is present in the suspension, this suspension having, after being stirred to dispel any thixotropic gelling, a viscosity of between 400 and 5,000 cP at 20 °C, and being stable for at least one year at temperatures of 40 °C and 0 °C and also under periodical variation between these temperatures.

6. Suspensions according to Claim 1, characterised in that the solid ingredients have a Coulter counter particle size distribution as follows:

| | |
|---|---|
| 0–4 µm | 50–90% |
| 4–8 µm | 10–40% |
| 8–12 µm | no more than 10% |
| > 12 µm | less than 2%. |

**Revendications**

1. Suspensions de pesticides stables au magasinage, fluides, émulsifiables avec de l'eau, contenant:

a) dans 100 parties de la suspension au moins 2,5 parties d'un composé pesticide biologiquement actif, qui est partiellement insoluble dans l'eau ou sensible à l'eau, qui est en outre un solide à des températures à 50 °C et possède une répartition des grosseurs de grains telle qu'il n'y a pas plus de 5% des particules qui soient plus grosses que 12 µm, le composé pesticide étant par ailleurs soluble, à 40 °C, à moins de 2 parties en poids dans 98 parties en poids de propylèneglycol,

b) du propylèneglycol comme solvant organique, qui forme la phase continue de la suspension, le solvant étant présent en une quantité telle que la suspension possède une viscosité comprise entre 400 et 5,000 cP à 20 °C,

c) un dispersant porteur d'ions, qui est solide à des temperatures inférieures à 50 °C, qui possède en outre une répartition des grosseurs de grains telle qu'il y ait moins de 5% des particules qui soient plus grosses que 12 µm, et qui est chimiquement inerte à l'égard du composé à activité pesticide et du solvant, le dispersant étant présent en une quantité telle que l'on évite une agglomération des particules du composé à activité pesticide et que l'on élimine

la croissance des particules du composé à activité pesticide, et

d) pour 100 parties du composé à activité pesticide, 25 à 100 parties d'une charge inerte, qui est solide à des températures inférieures à 50 °C, possède dans le solvant une solubilité inférieure à 100 ppm, est chimiquement inerte à l'égard du composé à activité pesticide, du solvant et du dispersant, et possède une capacité d'adsorption telle que chaque autre liquide présent éventuellement dans la suspension est adsorbé comme le solvant, la charge inerte étant présente en une quantité telle que l'on maintienne la stabilité de la suspension, à l'encontre d'une séparation, au moins 3 jours à −5 °C.

2. Procédé de préparation de suspensions selon la revendication 1, caractérisé en ce que:

a) on fragmente, éventuellement en présence d'un adjuvant de broyage, un composé pesticide biologiquement actif qui, à des températures inférieures à 50 °C, est solide, de manière qu'il ne possède pas plus de 5% des particules ayant une grosseur supérieur à 12 µm,

b) on combine ce composé pesticide, biologiquement actif et fragmenté, avec une quantité d'une charge inerte, solide au-dessous de 50 °C, qui possède une capacité d'adsorption telle que la capacité d'adsorption soit disponible pour agir, éventuellement pendant la fragmentation, sur des particules du composé pesticide à activité biologique qui fondent et sur des impuretés éventuellement présentes et à bas point de fusion,

c) on introduit une quantité d'un dispersant, portant des ions, solide au-dessous de 50 °C, telle que la suspension totale reste stable au moins 3 jours à −5 °C, et

d) on met ces solides en suspension dans une quantité de propylèneglycol telle qu'au moins 2,5 parties du composé pesticide biologiquement actif soient contenues dans 100 parties de la suspension et que la suspension possède à 20 °C une viscosité comprise entre 400 et 5,000 cP.

3. Suspensions selon la revendication 1, caractérisées en ce que Azinphos-Methyl est contenu comme composé pesticide biologiquement actif.

4. Suspensions selon la revendication 1, caractérisées en ce que le dispersant est un lignosulfonate de métal alcalin.

5. Suspensions selon la revendication 1, caractérisées en ce qu'elles contiennent:

a) 15,0–45,0 parties d'Azinphos-Methyl,

b) 5–10 parties d'un aluminate de sodium/oxyde de silicium, diluant ayant une surface spécifique de 180–225 $m^2/g$.

c) 0–3 parties d'un oxyde de silicium amorphe, diluant non capable d'adsorption, ayant une surface spécifique inférieure à 14,000 $cm^2/g$,

d) 1–5 parties d'argile de Barden,

e) 0,5–3 parties des sulfonates sans sucre, à base de sodium, de lignine de papier kraft,

f) 0–3 parties d'un isopropyl-naphtalènesulfonate de sodium, agent de mouillage, et

g) une quantité de propylèneglycol telle qu'il y ait dans la suspension une concentration en Azinphos-Methyl de 210 g/l à 540 g/l, de manière qu'après agitation, pour éliminer une éventuelle formation de gel thixotrope, cette suspension possède une viscosité comprise entre 400 et 5,000 cP à 20 °C et soit stable au moins un an à des températures de 40 °C et de 0 °C et également en cas de variation périodique entre ces températures.

6. Suspensions selon la revendication 1, caractérisées en ce que les matières solides contenues possèdent selon le compteur Coulter une répartition des grosseurs de grains comme suit:

| | |
|---|---|
| 0–4 µm | 50–90% |
| 4–8 µm | 10–40% |
| 8–12 µm | pas plus de 10% |
| > 12 µm | moins de 2%. |